# FASCICULE DE BREVET EUROPEEN

(11) **EP 1 289 370 B1**
(45) Date de publication et mention de la délivrance du brevet: **17.05.2006**
(21) Numéro de dépôt: 01940696.6
(22) Date de dépôt: 06.06.2001
(51) Int. Cl.: A21D 2/26, A21D 8/02, A21D 10/02, A21D 13/06

(54) **PATE HYPERPROTEINEE ET HYPOCALORIQUE POUR LA FABRICATION DE PRODUITS IMITANT LES PRODUITS DE PANIFICATION, ET SON PROCEDE DE PREPARATION**
PROTEINHYPERREICHER UND KALORIENARMER TEIG ZUR HERSTELLUNG VON BROTÄHNLICHEN PRODUKTEN, UND VERFAHREN ZU DESSEN HERSTELLUNG
HIGH-PROTEIN AND LOW-CALORIE DOUGH FOR MAKING PRODUCTS IMITATING BREAD-TYPE PRODUCTS, AND PREPARATION METHOD

(30) Priorité: 07.06.2000 FR 0007468
(43) Date de publication de la demande: 12.03.2003
(73) Titulaire: CEPRODI-Compagnie Européenne de Produits Diététiques, 75008 Paris (FR)
(72) Inventeur: ALLOUCHE, Réginald, 75006, Paris (FR)
(74) Mandataire: Boulinguiez, Didier
(86) Numéro de dépôt international: PCT/FR2001/001744
(87) Numéro de publication internationale: WO 2001/093686

(56) Documents cités:
- DE-A- 1 442 021
- DE-A- 2 336 562
- DE-A- 2 831 729
- DE-A- 3 026 598
- FR-A- 2 788 409
- GB-A- 1 534 534
- GB-A- 1 538 360
- MORANDINI W ET AL: "BROT MIT HOHEM EIWEISS- UND NIEDRIGEM KOHLENHYDRATGEHALT" GETREIDE MEHL UND BROT, BOCHUM, DE, vol. 28, no. 5, 1974, pages 121-124, XP000982491 ISSN: 0367-4177

## Description

La présente invention a pour objet une préparation alimentaire sous forme de pâte, apte à être mise en forme, notamment en pâtons, boules, galettes ou baguettes, qui peut se présenter à température ambiante (conditionnement sous atmosphère contrôlée par exemple) ou dans un état surgelé. Cette préparation alimentaire est destinée à être cuite ou simplement réchauffée au moment de la consommation, afin de conduire à l'obtention de produits contretypant ou évoquant les produits traditionnels de panification, et elle est caractérisée par une teneur élevée en protéines et une teneur faible en glucides et en lipides. Elle est donc à la fois hyperprotéinée et hypocalorique.

L'invention concerne également les produits de boulangerie obtenus par la mise en oeuvre de cette préparation alimentaire

Les produits traditionnels de panification, tels que les baguettes, les boules de pain, les tranches de pain de mie,... sont par excellence des produits difficilement intégrables dans un régime car, même s'ils ne contiennent pas forcément au départ une teneur élevée en lipides, leur teneur élevée en glucides restreint nettement leur consommation.

S'il est évident que les consommateurs sont de plus en plus attentifs à leur apparence physique et qu'ils ne veulent donc pas prendre de poids, il est également vrai qu'ils souhaitent cependant continuer à manger en se faisant plaisir, c'est-à-dire en mangeant à satiété des produits gustatifs. Ils sont de ce fait de plus en plus conduits à se tourner vers de multiples régimes dits "minceur", qui se caractérisent le plus généralement par un moindre apport calorique quotidien, obtenu par une moindre quantité d'aliments ingérés associée le plus souvent à une réduction de la teneur en lipides.

Malheureusement, ces régimes sont difficiles à observer sur une longue période et entraînent une perte de poids liée à une perte de masse musculaire. On observe alors un manque de tonicité et d'élasticité de la peau, et une asthénie physique et intellectuelle. En outre, les personnes suivant à la lettre ces régimes ne mangent pas autant qu'elles le souhaiteraient et souffrent donc de la faim et éprouvent des frustrations.

Il existe de ce fait un besoin de disposer de produits de régime qui, tout en étant hypocaloriques, n'entraînent pas les conséquences néfastes indiquées ci-dessus et qui permettent au consommateur de suivre un régime avec plaisir, c'est-à-dire qui lui permettent de manger à satiété et de perdre sa masse graisseuse, sans que ce soit au détriment de sa masse maigre. Les demandes de brevet d'invention DE 23 36 562, DE 28 21 729, GB 1 538 360, DE 1 442 021 et DE 30 26 598 divulguent des produits de panification hypocaloriques et hyperprotéinés.

Il est reconnu qu'il serait nécessaire de procurer à l'organisme, lors de ces périodes de réductions caloriques, un apport plus important en protéines de haute valeur nutritionnelle et biologique.

Mais cette contrainte supplémentaire complique encore l'exercice de formulation de compositions alimentaires qui soient à la fois hypocaloriques, industrialisables, organoleptiquement satisfaisantes, stables au point du vue du vieillissement et qui soient aisées à préparer, sans adjonction de matière grasse.

Ceci est encore plus ardu dans le cas de produits de boulangerie, compte tenu de la structure aérée de ces produits et de la difficulté d'obtenir un réseau glutineux stable et résistant aux phénomènes de rassissement.

Or, il est du mérite du Demandeur d'avoir réussi à mettre au point, après de nombreux essais, une préparation alimentaire qui, une fois préparée, conduit à des produits évoquant ou contretypant les produits traditionnels de panification et qui sont en même temps riches en protéines, hypocaloriques, organoleptiquement satisfaisants, stables au point de vue texture, et faciles à préparer.

Ladite préparation alimentaire se présente sous la forme d'une pâte fraîche, surgelée, précuite ou cuite. Le plus généralement, elle se présente sous forme précuite ou cuite, à température ambiante (le conditionnement étant le plus généralement effectué sous atmosphère contrôlée) ou sous une forme surgelée, nécessitant évidemment une étape de cuisson avant la consommation.

Cette pâte peut être mise en forme de boules, de pâtons, de galettes ou de baguettes par exemple avant les étapes de précuisson ou de cuisson.

Cette pâte est caractérisée par le fait qu'elle présente, les pourcentages étant exprimés en poids sur le produit commercial :
- une teneur totale en protéines (mesurée en N×6.25) comprise entre 5 et 25 %, de préférence entre 6 et 23 %, et plus préférentiellement encore entre 7 et 22 %,
- une teneur en glucides comprise entre 10 et 27 %, de préférence entre 10 et 26 %, et plus préférentiellement encore entre 11 et 25 %,
- une teneur en lipides comprise entre 0.01 et 2 %, de préférence entre 0.05 et 2 %, et plus préférentiellement encore entre 0.09 et 1.75 %,
- une teneur en protéine de lait totale comprise entre 8 et 30%, de préférence entre 8 et 28%, et plus préférentiellement encore entre 8.5 et 25%.
- une teneur en eau de 45 à 70 %.

La valeur calorique totale du produit commercial se situe entre 90 et 200 kcal/100 g, de préférence entre 95 et 180 kcal/100 g et plus préférentiellement encore entre 95 et 178 kcal/100 g.

La pâte alimentaire selon l'invention est également caractérisée par le fait que son indice chimique est supérieur à 100. Il est rappelé qu'on entend par indice chimique le produit par 100 du plus petit des quotients obtenus en divisant, pour chacun des acides aminés essentiels ou groupes d'acides aminés essentiels, la quantité présente dans 100 g de produit par la quantité correspondante présente dans 100 g de la protéine servant de référence, celle-ci étant caractérisée par les teneurs suivantes rapportées à 100 g:
- L isoleucine 4 g
- L leucine 7 g
- L lysine 5,5 g
- DL méthionine + L cystine 3,5 g
- L phénylalanine + L tyrosine 6 g
- L thréonine 4 g
- L tryptophane 1 g
- L valine 5 g

Les protéines utilisées pour la constitution de la pâte alimentaire conforme à l'invention peuvent être d'origine animale et/ou végétale.

On préfère utiliser comme source essentielle de protéines (autres que celles provenant de la farine) les protéines laitières, telles que la caséine, les caséinates, la protéine laitière totale, la lactalbumine, le lactosérum. La protéine laitière totale, obtenue à partir de lait écrémé par un procédé d'ultrafiltration garantissant une non dénaturation des protéines, est avantageusement utilisée. En tant que de besoin, on peut ajouter également en tant que protéine, du gluten, de blé notamment, ou des protéines de soja.

Comme glucides, on peut utiliser les farines de toute provenance, tous les types d'amidon, de toute provenance, qu'ils soient natifs ou modifiés, notamment les amidons de maïs et les amidons de blé ; les sucres et les polyols.

Comme lipides, on préfère utiliser des matières grasses de coprah, de palme, de soja ou de tournesol sous forme de poudre ou de liquide.

Bien entendu, la pâte conforme à l'invention peut également contenir d'autres ingrédients conventionnels tels que des arômes, des épaississants, des acides aminés, des épices, des condiments, des exhausteurs de goût, des conservateurs, des colorants, des vitamines, des minéraux, des fibres solubles ou insolubles comme notamment l'inuline ou les polymères de glucose ou de fructose, des émulsifiants, des poudres levantes et des édulcorants intenses ; et peut renfermer en outre des morceaux ou de la poudre de légumes, de viandes, de poissons, de fromages ou de fruits.

Selon une réalisation préférentielle de l'invention, la préparation alimentaire sous forme de pâte selon l'invention contient :
- de 8 à 30 %, de préférence de 8 à 28 %, et plus préférentiellement encore de 8.5 à 25 % de protéine de lait totale,
- une farine, de préférence de blé, en une quantité généralement comprise entre 13 et 35 %, de préférence entre 14 et 33 %, et plus préférentiellement encore entre 15 et 33 %,
- un agent levant, comme une levure de boulangerie, cet agent levant étant présent le plus généralement en une quantité comprise entre 0.2 et 1.2 %, de préférence entre 0.25 et 1 %, et plus préférentiellement encore entre 0.25 et 0.9 %,
- de l'eau, en une quantité comprise entre 42 et 75 %, de préférence de 45 à 72 %.

L'invention a également pour objet le procédé de fabrication de la préparation alimentaire selon l'invention, ce procédé comprenant les étapes suivantes :
- sélection des ingrédients, pesée et dosage, lesdits ingrédients étant pour la plupart sous forme de poudres,
- mélange intime de ces ingrédients, avec ou sans prémélange,
- addition d'eau à température ambiante dans ledit mélange, sous agitation modérée et régulière, par exemple dans un pétrin, afin de conduire à la formation d'une pâte liée et homogène,
- temps de repos généralement compris entre 5 minutes et 1 heure,
- formage,
- temps de repos en étuve ou non, le plus généralement compris entre 5 minutes et 3 heures,
- cuisson ou pré-cuisson dans un four ventilé à une température comprise entre 130°C et 180°C, de préférence d'environ 160°C, pendant un temps compris entre 5 et 40 minutes, le plus généralement voisin de 20 minutes,
- surgélation ou conditionnement sous atmosphère contrôlée.

Dans le cas où la préparation alimentaire conforme à l'invention est destinée à être vendue directement sous forme de pâte crue, une étape de surgélation est effectuée après l'étape de repos en étuve, et l'étape de cuisson se fait alors directement chez le consommateur ou le fabricant industriel ou la collectivité.

En ce qui concerne l'étape de formage, elle peut consister simplement en une mise sous forme de pâtons, de boules, de galettes ou de baguettes par exemple.

L'invention pourra être mieux comprise à l'aide des exemples qui suivent, qui sont donnés à titre purement illustratif.

### EXEMPLES

Plusieurs essais de fabrication de boules de pain ont été réalisés à l'aide des ingrédients repris dans le Tableau 1 ci-dessous. L'addition d'eau et le mélange des différents ingrédients ont été réalisés dans un pétrin, le temps de repos de la pâte a été de 2 heures et la cuisson a été réalisée dans un four ventilé à 160°C pendant environ 20 minutes.

**Tableau 1**

| **Ingrédients** | **Essai 1** | **Essai 2** | **Essai 3** | **Essai 4** |
|---|---|---|---|---|
| Farine de blé de type 55 | 40.71 | 42.9 | 42.9 | 29.77 |
| Caséinate de calcium 220 (fourni par la Société EPI) | 0 | 0 | 26.8 | 0 |
| Protéine de soja de la Société Lucas Meyer | 0 0 | 26.8 26.8 | 0 0 | 0 0 |
| Protéine de lait totale PL 80 fournie par la Société Triballat | 30 | 0 | 0 | 16.08 |
| Sel | 1.27 | 1.35 | 1.35 | 0.78 |
| Levure (Société Biospringer) | 2.03 | 2.15 | 2.15 | 0.62 |
| Eau | 25.99 | 26.8 | 26.8 | 52.75 |
| Teneur en protéines (N×6.25) en % | 29 | 27 | 28.4 | 15.87 |
| Lipides (en %) | 1 | 0.8 | 0.95 | 0.58 |
| Glucides (en %) | 21 | 20 | 20 | 22.1 |
| Aspect général après cuisson | Bombé, levé, homogène | Pas très levé, retombe pendant la cuisson. Lourd et épais | Pas du tout homogène : croûte bombée et séparée de la mie (formation d'une grosse bulle au milieu du produit) | Homogène, bien bombé, aéré, stable à la cuisson |
| Aspect de la mie | Cuite, stable | Humide, pas très cuite | Pas cuite du tout, gélatineuse | Cuite, stable, couleur blanche |
| Aspect de la croûte | Distincte de la mie | Trop humide et élastique | Couleur très rouge, distincte de la mie | Distincte de la mie, bien cuite, couleur dorée, foncée et homogène |
| Goût | Assez neutre | Très végétal | Très médiocre | Excellent |

Les remarques suivantes peuvent être faites à propos de ces essais.

L'Essai 1 donne des résultats à peu près satisfaisants, mais cependant la valeur calorique du produit est encore trop importante et le goût n'est pas satisfaisant.

L'utilisation de protéine de soja à la place de protéine de lait totale donne des résultats médiocres.

L'utilisation, dans l'Essai 3, de caséinate de calcium en lieu et place de la protéine de lait totale, donne également des résultats non satisfaisants.

L'Essai 4 correspond à l'invention. On peut constater que la teneur en farine a été très notablement diminuée par rapport à un produit conventionnel. L'utilisation de protéine de lait totale, c'est-à-dire de protéine obtenue après élimination de la majeure partie du lactose, permet l'obtention d'un produit de structure homogène, bien aérée, stable ayant un goût excellent. L'utilisation de cette protéine permet également l'obtention d'une couleur dorée adéquate de la croûte, ce qui rapproche le produit conforme à l'invention des produits de boulangerie traditionnels.

## Revendications

1. Préparation alimentaire hyperprotéinée et hypocalorique sous forme de pâte apte à être mise en forme, notamment en pâtons, boules, galettes, ou baguettes, pour la fabrication de produits contretypant ou évoquant les produits traditionnels de panification, **caractérisée par le fait qu'**elle présente, les pourcentages étant exprimés en poids sur le produit commercial :
- une teneur totale en protéines (mesurée en Nx6.25) comprise entre 5 et 25 %, de préférence entre 6 et 23 %, et plus préférentiellement encore entre 7 et 22 %,
- une teneur en glucides comprise entre 10 et 27 %, de préférence entre 10 et 26 %, et plus préférentiellement encore entre 11 et 25 %,
- une teneur en lipides comprise entre 0.01 et 2 %, de préférence entre 0.05 et 2 %, et plus préférentiellement encore entre 0.09 et 1.75 %,
- une teneur en protéine de lait totale comprise entre 8 et 30 %, de préférence entre 8 et 28 %, et plus préférentiellement encore entre 8.5 et 25 %.
- une teneur en eau de 45 à 70 %.

2. Préparation alimentaire selon la revendication 1, **caractérisée par le fait qu'**elle comprend une farine, de préférence de blé, en une quantité comprise entre 13 et 35 %, de préférence entre 14 et 33 %, et plus préférentiellement encore entre 15 et 33 %, ces pourcentages étant exprimés en poids par rapport au produit commercial.

3. Préparation alimentaire selon l'une quelconque des revendications 1 à 2, **caractérisée par le fait qu'**elle contient un agent levant, de préférence une levure de boulangerie, en une quantité comprise entre 0.2 et 1.2 %, de préférence entre 0.25 et 1 %, et plus préférentiellement encore entre 0.25 et 0.9 %.

4. Préparation alimentaire selon l'une quelconque des revendications 1 à 3, **caractérisée par le fait que** la valeur calorique totale du produit commercial se situe entre 90 et 200 Kcalories par 100 g, de préférence entre 95 et 180 Kcalories par 100 g, et plus préférentiellement encore entre 95 et 178 Kcalories par 100 g.

5. Préparation alimentaire selon l'une quelconque des revendications 1 à 4, **caractérisée par le fait que** son indice chimique est supérieur à 100.

6. Procédé de fabrication d'une préparation alimentaire selon l'une quelconque des revendications 1 à 5, **caractérisée par le fait qu'**il comprend les étapes suivantes :
- sélection des ingrédients, pesée et dosage, lesdits ingrédients étant pour la plupart sous forme de poudres,
- mélange intime de ces ingrédients, avec ou sans prémélange,
- addition d'eau à température ambiante dans ledit mélange, sous agitation modérée et régulière, par exemple dans un pétrin, afin de conduire à la formation d'une pâte liée et homogène,
- temps de repos, généralement pendant 5 minutes à 1 heure,
- formage,
- temps de repos en étuve ou non, le plus généralement pendant 5 minutes à 3 heures,
- cuisson ou pré-cuisson dans un four ventilé à une température comprise entre 130°C et 180°C, de préférence d'environ 160°C, pendant un temps compris entre 5 et 40 minutes, le plus généralement voisin de 20 minutes,
- surgélation ou conditionnement sous atmosphère contrôlée.

7. Procédé de fabrication d'une préparation alimentaire selon l'une quelconque des revendications 1 à 5, **caractérisé par le fait qu'**il comprend les étapes suivantes :
- sélection des ingrédients, pesée et dosage, lesdits ingrédients étant pour la plupart sous forme de poudres,
- mélange intime de ces ingrédients, avec ou sans prémélange,
- addition d'eau à température ambiante dans ledit mélange, sous agitation modérée et régulière, par exemple dans un pétrin, afin de conduire à la formation d'une pâte liée et homogène,
- temps de repos, généralement pendant 5 minutes à 1 heure,
- formage,
- temps de repos en étuve ou non, le plus généralement pendant 5 minutes à 3 heures,
- surgélation,
- conditionnement.

8. Produit de boulangerie obtenu par mise en oeuvre de la préparation alimentaire selon l'une quelconque des revendications 1 à 5.

## Claims

1. A high protein and low calorie food preparation in the form of dough suited to shaping, in particular into rolls, balls, patties or baguettes, for making products imitating or resembling conventional bread-type products, **characterized in that** it has, the percentages being expressed by weight with reference to the commercial product:
- a total protein content (measured in Nx6.25) of between 5 and 25%, preferably between 6 and 23%, and still more preferably between 7 and 22%,
- a carbohydrate content of between 10 and 27%, preferably between 10 and 26%, and still more preferably between 11 and 25%,
- a lipid content of between 0.01 and 2%, preferably between 0.05 and 2%, and still more preferably between 0.09 and 1.75%,
- a total milk protein content of between 8 and 30%, preferably between 8 and 28%, and still more preferably between 8.5 and 25%,
- a water content of 45 to 70%.

2. The food preparation as claimed in claim 1, **characterized in that** it comprises a flour, preferably from wheat, in a quantity of between 13 and 35%, preferably between 14 and 33%, and still more preferably between 15 and 33%, these percentages being expressed by weight with reference to the commercial product.

3. The food preparation as claimed in any one of claims 1 to 2, **characterized in that** it contains a leavening agent, preferably baker's yeast, in a quantity of between 0.2 and 1.2%, preferably between 0.25 and 1%, and still more preferably between 0.25 and 0.9%.

4. The food preparation as claimed in any one of claims 1 to 3, **characterized in that** the total calorific value of the commercial product is between 90 and 200 Kcalories per 100 g, preferably between 95 and 180 Kcalories per 100 g, and still more preferably between 95 and 178 Kcalories per 100 g.

5. The food preparation as claimed in any one of claims 1 to 4, **characterized in that** its chemical value is greater than 100.

6. A method for making a food preparation as claimed in any one of claims 1 to 5, **characterized in that** it comprises the following steps:
- selecting the ingredients, weighing and measuring out, said ingredients being for the most part in powdered form,
- intimately mixing these ingredients with or without premixing,
- adding water at room temperature to said mixture, with moderate and regular stirring, for example in a kneader, so as to lead to the formation of a connected and homogeneous dough,
- rest time generally of between 5 minutes and 1 hour,
- shaping,
- rest time in a proof box or not, most generally of between 5 minutes and 3 hours,
- baking or prebaking in a ventilated oven at a temperature of between 130°C and 180°C, preferably of about 160°C, for a period of between 5 and 40 minutes, most generally in the region of 20 minutes,
- deep-freezing or packaging under a controlled atmosphere.

7. A method for making a food preparation as claimed in any one of claims 1 to 5, **characterized in that** it comprises the following steps:
- selecting the ingredients, weighing and measuring out, said ingredients being for the most part in powdered form,
- intimately mixing these ingredients with or without premixing,
- adding water at room temperature to said mixture, with moderate and regular stirring, for example in a kneader, so as to lead to the formation of a connected and homogeneous dough,
- rest time generally of between 5 minutes and 1 hour,
- shaping,
- rest time in a proof box or not, most generally of between 5 minutes and 3 hours,
- deep-freezing,
- packaging.

8. A bakery product obtainable from the food preparation as claimed in any one of claims 1 to 5.

## Patentansprüche

1. Protein-hyperreiche und kalorienarme Lebensmittel-Zubereitung in Form von Teig, welche dazu geeignet ist, insbesondere als Stopfnudeln, Kugeln, Waffeln oder Stangenbrote in Form gebracht zu werden, zur Herstellung von Produkten, welche die traditionellen Bäckerei-Produkte nachahmen oder an sie erinnern, **dadurch gekennzeichnet, dass** sie aufweist, wobei die Prozentangaben Gewichts-bezogen bezüglich dem kommerziellen Produkt ausgedrückt sind:
- einen Gesamt-Gehalt an Proteinen (gemessen in Nx6,25) zwischen 5 und 25%, bevorzugt zwischen 6 und 23% und noch stärker bevorzugt zwischen 7 und 22%,
- einen Gesamt-Gehalt an Kohlenhydraten zwischen 10 und 27%, bevorzugt zwischen 10 und 26% und noch stärker bevorzugt zwischen 11 und 25%,
- einen Gehalt an Lipiden zwischen 0,01 und 2%, bevorzugt zwischen 0,05 und 2% und noch stärker bevorzugt zwischen 0,09 und 1,75 %,
- einen Gesamt-Gehalt an Milch-Protein zwischen 8 und 30%, bevorzugt zwischen 8 und 28% und noch stärker bevorzugt zwischen 8,5 und 25%,
- einen Wasser-Gehalt von 45 bis 70 %.

2. Lebensmittel-Zubereitung gemäß Anspruch 1, **dadurch gekennzeichnet, dass** sie ein Mehl, bevorzugt aus Weizen/Getreide, in einer Menge zwischen 13 und 35%, bevorzugt zwischen 14 und 33% und noch stärker bevorzugt zwischen 15 und 33% umfasst, wobei diese Prozentangaben Gewichts-bezogen bezüglich dem kommerziellen Produkt ausgedrückt sind.

3. Lebensmittel-Zubereitung gemäß einem der Ansprüche 1 bis 2, **dadurch gekennzeichnet, dass** sie ein Treibmittel, bevorzugt ein Bäckerei-Treibmittel in einer Menge zwischen 0,2 und 1,2%, bevorzugt zwischen 0,25 und 1% und noch stärker bevorzugt zwischen 0,25 und 0,9% umfasst.

4. Lebensmittel-Zubereitung gemäß einem der Ansprüche 1 bis 3, **dadurch gekennzeichnet, dass** der Gesamt-Kalorien-Wert des kommerziellen Produktes sich zwischen 90 und 200 kcal pro 100g, bevorzugt zwischen 95 und 180 kcal pro 100g, und noch stärker bevorzugt zwischen 95 und 178 kcal pro 100g befindet.

5. Lebensmittel-Zubereitung gemäß einem der Ansprüche 1 bis 4, **dadurch gekennzeichnet, dass** ihr Chemie-Index ("indice chimique") größer ist als 100.

6. Verfahren zum Herstellen einer Lebensmittel-Zubereitung gemäß einem der Ansprüche 1 bis 5, **dadurch gekennzeichnet, dass** es die folgenden Schritte umfasst:
- Auswahl von Ingredienzien, Abwiegen und Dosieren, wobei diese Ingredienzien größtenteils in Form von Pulvern vorliegen,
- inniges Vermischen dieser Ingredienzien mit oder ohne Vor-Mischen,
- Zufügen von Wasser bei Umgebungs-Temperatur zu dieser Mischung unter moderatem und regelmäßigem Rühren, beispielsweise in einem/einer Backtrog/Knet-Vorrichtung, um zur Bildung eines verbundenen und homogenen Teiges zu führen,
- Ruhe-Zeit, im Allgemeinen von 5 Minuten bis zu 1 Stunde,
- Formen
- Ruhe-Zeit, in einem Wärmeschrank oder nicht, im allgemeinsten von 5 Minuten bis zu 3 Stunden,
- Backen oder Vor-Backen in einem belüfteten Ofen bei einer Temperatur zwischen 130°C und 180°C, bevorzugt von ungefähr 160°C, während einer Zeit zwischen 5 und 40 Minuten, am allgemeinsten in der Nähe von 20 Minuten,
- Tiefkühlung oder Konditionierung unter geregelter Atmosphäre.

7. Verfahren zum Herstellen einer Lebensmittel-Zubereitung gemäß einem der Ansprüche 1 bis 5, **dadurch gekennzeichnet, dass** es die folgenden Schritte umfasst:
- Auswahl von Ingredienzien, Abwiegen und Dosieren, wobei diese Ingredienzien größtenteils in Form von Pulvern vorliegen,
- inniges Vermischen dieser Ingredienzien mit oder ohne Vor-Mischen,
- Zufügen von Wasser bei Umgebungs-Temperatur zu dieser Mischung unter moderatem und regelmäßigem Rühren, beispielsweise in einem/einer Backtrog/Knet-Vorrichtung, um zur Bildung eines verbundenen und homogenen Teiges zu führen,
- Ruhe-Zeit, im Allgemeinen von 5 Minuten bis zu 1 Stunde,
- Formen
- Ruhe-Zeit, in einem Wärmeschrank oder nicht, im allgemeinsten von 5 Minuten bis zu 3 Stunden,
- Tiefkühlung
- Konditionierung.

8. Bäckerei-Erzeugnis, welches durch Einsatz der Lebensmittel-Zubereitung gemäß einem der Ansprüche 1 bis 5 erhalten wird.
